# EUROPÄISCHE PATENTSCHRIFT

(11) **EP 2 066 421 B1**
(45) Veröffentlichungstag und Bekanntmachung des Hinweises auf die Patenterteilung: **10.02.2016**
(21) Anmeldenummer: 07820212.4
(22) Anmeldetag: 14.09.2007
(51) Int. Cl.: B01D 17/04, C10G 33/00

(54) **EINRICHTUNG ZUM ERZEUGEN EINER DISKRETEN FLÜSSIGPHASE IN EINER KONTINUIERLICHEN FLÜSSIGPHASE**
SYSTEM FOR GENERATING A DISCRETE LIQUID PHASE IN A CONTINUOUS LIQUID PHASE
DISPOSITIF DE FORMATION D'UNE PHASE LIQUIDE SÉPARÉE DANS UNE PHASE LIQUIDE CONTINUE

(30) Priorität: 18.09.2006 EP 06120826
(43) Veröffentlichungstag der Anmeldung: 10.06.2009
(73) Patentinhaber: Sulzer Chemtech AG, 8404 Winterthur (CH)
(72) Erfinder: BACHMANN, Christian Gottlieb, 8548 Ellikon An Der Thur (CH); GÄBLER, Ansor, 78462 Konstanz (DE)
(74) Vertreter: Manitz, Finsterwald & Partner GbR
(86) Internationale Anmeldenummer: PCT/EP2007/059706
(87) Internationale Veröffentlichungsnummer: WO 2008/034772

(56) Entgegenhaltungen:
- EP-A- 1 279 430
- WO-A-2005/100512
- FR-A- 2 611 528
- GB-A- 2 305 933
- DATABASE WPI Week 198921 Derwent Publications Ltd., London, GB; AN 1989-157452 XP002418954 & SU 1 437 068 A (MOSCOW CHEM EQUIP INST) 15. November 1988 (1988-11-15)
- DATABASE WPI Week 197919 Derwent Publications Ltd., London, GB; AN 1979-36776B XP002418955 & SU 613 771 A (PETRO PREPW TRANSP) 15. Juni 1978 (1978-06-15)

## Beschreibung

Die Erfindung betrifft eine Einrichtung zum Erzeugen einer diskreten Flüssigphase in einer kontinuierlichen Flüssigphase gemäss Oberbegriff von Anspruch 1, eine Anlage mit solchen Einrichtungen sowie eine Verwendung dieser Anlage.

Aus der WO 2005/100512 (PCT/EP2005/004654) ist ein Verfahren und eine entsprechende Vorrichtung zum Reinigen von Rohöl bekannt. Bei diesem Reinigungsverfahren wird in einer ersten Stufe eine entgaste Emulsion gewonnen, die in einer zweiten Stufe in Wasser und Oel geschieden wird. Die zweite Stufe wird in einem Behälter einer Reinigungseinrichtung durchgeführt, die ein Verteilsystem für Waschwasser enthält. Eine Phasengrenzfläche zwischen Wasser und Oel wird mit dem Waschwasser in Kontakt gebracht, so dass eine reinigende Behandlung stattfindet. Aufgrund von Koaleszenz der beiden Phasen können diese von einander getrennt werden. Das Verfahren kann verbessert werden, wenn die Emulsion tröpfchenfömig in eine kontinuierliche Phase eingebracht wird, die aus Waschwasser besteht. Dies ist eine erste Reinigungsstufe. Das so gewaschene Oel bildet nach einer Koaleszenz eine zweite kontinuierliche Phase, in die zusätzlich frisches Waschwasser tröpfchenfömig oder mit erhöhtem Impuls zur Unterstützung der Reinigung der Phasengrenze eingebracht werden kann. Zwischen den beiden kontinuierlichen Phasen ergibt sich eine Übergangszone, in der die Koaleszenz (sowohl des Oels als auch des Wassers) stattfindet. Die Zufuhr der Emulsion und des Waschwassers in die Reinigungseinrichtung wird so eingestellt, dass die Übergangszone in einer vorgegebenen Lage ein wesentlich kleineres Volumen einnimmt als die beiden kontinuierlichen Phasen. Für die beiden diskreten Phasen gibt es jeweils eine optimale Tröpfchengrösse für den Wascheffekt sowie eine optimale Scherung der dispersen Phasen zum Erreichen der Phasentrennung, die sich empirisch bestimmen lässt. Voraussetzung für ein optimales Reinigungsverfahren ist es, dass es gelingt, die optimale Grösse der Tröpfchen oder Tropfen herzustellen und die diskreten Phasen jeweils in den kontinuierlichen Phasen gleichmässig zu verteilen. Dazu ist eine geeignet ausgebildete Einrichtung notwendig.

In der SU 1437068 A1 ist eine Einrichtung zum Trennen einer Wasser-in-Erdöl-Emulsion offenbart. Hierfür wird die Wasser-in-Erdöl-Emulsion durch Verteilerröhren geleitet, wobei die Verteilerröhren mit Bohrungen versehen sind, durch welche die Wasser-in-Erdöl-Emulsion in eine kontinuierliche Wasserschicht ausfließt. Durch Leiten der Wasser-in-Erdöl-Emulsion gegen Prallbleche bilden sich Tröpfchen, welche zur Oberfläche aufsteigen.

Aufgabe der Erfindung ist es, eine Einrichtung zum Erzeugen einer diskreten Flüssigphase in einer kontinuierlichen Flüssigphase zu schaffen, bei der eine für den Separationsprozess förderliche Scherung der diskreten Phase aufgebracht wird sowie eine Herstellung der vorgegebenen Tropfengrössen der diskreten Phase und deren gleichmässige Verteilung in der kontinuierlichen Phase realisierbar ist. Diese Aufgabe wird durch die im Anspruch 1 definierte Einrichtung gelöst.

Die Einrichtung dient zum Erzeugen einer diskreten Flüssigphase in einer kontinuierlichen Flüssigphase mit einer ersten bzw. einer zweiten Flüssigkeit. Die beiden Flüssigkeiten koexistieren als getrennte Phasen, haben unterschiedliche Dichten und lassen einen erwünschten Stoffaustausch zu. Es ist vorgesehen, die Einrichtung in einem Behälter anzuordnen, der die zweite, die kontinuierliche Phase bildende Flüssigkeit enthält. Die Einrichtung umfasst in einer horizontalen Längserstreckung ein Verteilorgan, insbesondere ein zylindrisches Rohr, und einen Auffangkanal für die erste Flüssigkeit. Das Verteilorgan weist Austrittsöffnungen zum Einbringen der ersten Flüssigkeit in den Auffangkanal auf. Der Auffangkanal weist eine offene Ausgangsseite, eine den Auffangkanal begrenzende Auffangseite und mindestens eine den Auffangkanal begrenzende Seitenwand auf, wobei sich die Auffangseite von dem Verteilorgan ausgehend horizontal erstreckt und die Seitenwand beabstandet zum Verteilorgan angeordnet ist und die Ausgangsseite und die Auffangseite verbindet, wobei die Seitenwand auf der Ausgangsseite und/oder der Auffangseite Mittel zum Erzeugen der diskreten Phase in Form von Tropfen aufweist. Die Seitenwand stellt zwischen der Ausgangsseite und einer horizontalen Abtropfkante eine Verbindungsfläche her. Die Seitenwand weist eine Neigung bzw. Form auf, die die Bildung eines Flüssigkeitsfilmes ermöglicht wozu die Seitenwand auf der Ausgangsseite und/oder der Auffangseite Mittel zum Erzeugen der diskreten Phase in Form von Tropfen aufweist.

Um die Stabilität des Flüssigkeitsfilmes zu erhöhen, kann die Seitenwand eine für die erste Flüssigkeit gute Benetzbarkeit aufweisen. Die Abtropfkante oder die Seitenwand weist vorteilhafterweise eine Profilierung auf, insbesondere eine Zahnung zur Erzeugung der diskreten Phase in Form von Tropfen, die vorzugsweise aufgrund einer gleichmässigen Zahnung gleich gross sind.

Die abhängigen Ansprüche 2 bis 10 betreffen vorteilhafte Ausführungsformen der erfindungsgemässen Einrichtung. Eine Anlage, in der diese Einrichtung zum Einsatz kommt, ist Gegenstand der Ansprüche 11 bis 13. Verwendungsmöglichkeiten der Anlage sind Gegenstand der Ansprüche 14 und 15.

Das Mittel umfasst eine Mehrzahl von Durchbrüchen, die ein gleichmässiges Abfliessen der ersten Flüssigkeit aus dem Innenbereich entlang der Ausgangsseite und/oder der Auffangseite der Seitenwand ermöglichen. Die Durchbrüche (61) sind lochartig, zackenartig, einschnittartig oder als Zahnung ausgebildet. Vorzugsweise weisen sie eine periodisch wiederkehrende Profilierung auf, sodass die Flüssigkeit gleichmässig auf die Ausgangsseite und/oder die Auffangseite der Seitenwand geleitet wird.

Die Seitenwand kann eine Abtropfkante aufweisen, entlang derer sich Tropfen möglichst einheitlicher Grösse ablösen und in die Flüssigkeit, welche die kontinuierliche Phase bildet, aufgenommen werden. Die Seitenwand ist entweder zumindest teilweise vertikal ausgerichtet oder weist eine Neigung gegenüber der Horizontalen auf, die zwischen 10° und 85°, vorzugsweise zwischen 20° und 60°, besonders bevorzugt 30° bis 40° beträgt. Zudem kann die Seitenwand zumindest einen Knick aufweisen. Nach einem weiteren Ausführungsbeispiel weist die Seitenwand an zumindest einer ihrer seitlichen Kanten ein Führungselement auf, sodass die Flüssigkeit ausgehend von der Ausgangsseite in Richtung Auffangseite über die Seitenwand bzw. die Durchbrüche geleitet wird. In der Auffangseite können zusätzlich Löcher für die erste Flüssigkeit und eine diese Löcher abschirmende Wand mit einer Abtropfkante vorgesehen sein.

Der Auffangkanal umfasst zusätzlich mindestens ein umlenkendes Hindernis, insbesondere ein Umlenkelement, das vor Austrittsöffnungen des Verteilorgans angeordnet ist und durch welches die erste Flüssigkeit in einen Innenbereich des Auffangkanals zur Auffangseite hin umlenkbar ist, wobei insbesondere die Austrittsöffnungen des Verteilorgans auf einem linearen Streifen angeordnet sind und das Umlenkelement diesem linearen Streifen gegenüber liegt und eine zusammenhängende, ebene oder konkave Umlenkfläche bildet.

Die Anlage umfasst einen Behälter, der einen Boden und Seitenwände umfasst, sowie eine Mehrzahl von im Behälter angeordneten Einrichtungen gemäss obiger Ausführung. Derartige Einrichtungen, nachfolgend untere Einrichtungen genannt, sind benachbart zum Boden angeordnet und deren Ausgangsseiten sind gegen unten offen, und/oder solche bzw. weitere Einrichtungen, nachfolgend obere Einrichtungen genannt, sind in einem oberen Bereich des Behälters angeordnet und deren Ausgangsseiten sind gegen oben offen,
wobei im Fall der unteren Einrichtungen der Boden ein umlenkendes Hindernis für aus dem Verteilorgan austretende Flüssigkeit sein kann. Insbesondere sind horizontale Querschnittsflächen des Behälters durch die Einrichtungen gleichmässig belegt, wobei die Einrichtungen vorzugsweise parallel ausgerichtet sind. Sowohl untere als auch obere Einrichtungen sind vorgesehen, sodass zum Einspeisen in den Behälter die unteren Einrichtungen für eine leichte Flüssigkeit und die oberen Einrichtungen für eine schwere Flüssigkeit vorgesehen sind, dass ferner am Boden eine Ablaufleitung für die schwere Flüssigkeit bzw. für die leichte Flüssigkeit sowie mindestens ein Abflussorgan, das insbesondere eine Ablaufleitung und/oder ein Überlaufwehr umfasst, über den oberen Einrichtungen angeordnet sind. Eine derartige Anlage findet Verwendung insbesondere zur Reinigung von Rohöl, wobei die schwere Flüssigkeit Wasser und die leichte Flüssigkeit ein zu reinigendes Rohöl ist und im oberen Bereich des Behälters das Wasser als diskrete Phase Verunreinigungen aus dem Rohöl, d.h. der kontinuierlichen Phase, aufnimmt und im unteren Bereich des Behälters das Wasser als zweite kontinuierliche Phase Verunreinigungen aus aufsteigenden Öltröpfchen aufnimmt, wobei zwischen den beiden kontinuierlichen Phasen eine Zone liegt, in der die diskreten Phasen durch Koaleszenz zu den entsprechenden kontinuierlichen Phasen verschmelzen.Insbesondere kann die Anlage Verwendung auf einer schwimmfähigen Plattform oder einem Transportmittel, insbesondere einem Schiff, finden.

Nachfolgend wird die Erfindung anhand der Zeichnungen erläutert. Es zeigen:
- Fig. 1 - 3: eine erste Ausführungsform der erfindungsgemässen Einrichtung, ferner eine zweite bzw. dritte Ausführungsform und
- Fig. 4: eine Anlage mit erfindungsgemässen, in einem Behälter angeordneten Einrichtungen.
- Fig. 5: eine weitere Ausführungsform der erfindungsgemässen Einrichtung mit weiteren Ausgestaltungsmöglichkeiten für die Wandkante und die Abtropfkante
- Fig. 6: eine weitere Ausführungsform der erfindungsgemässen Einrichtung mit einer gekrümmten Seitenwand.

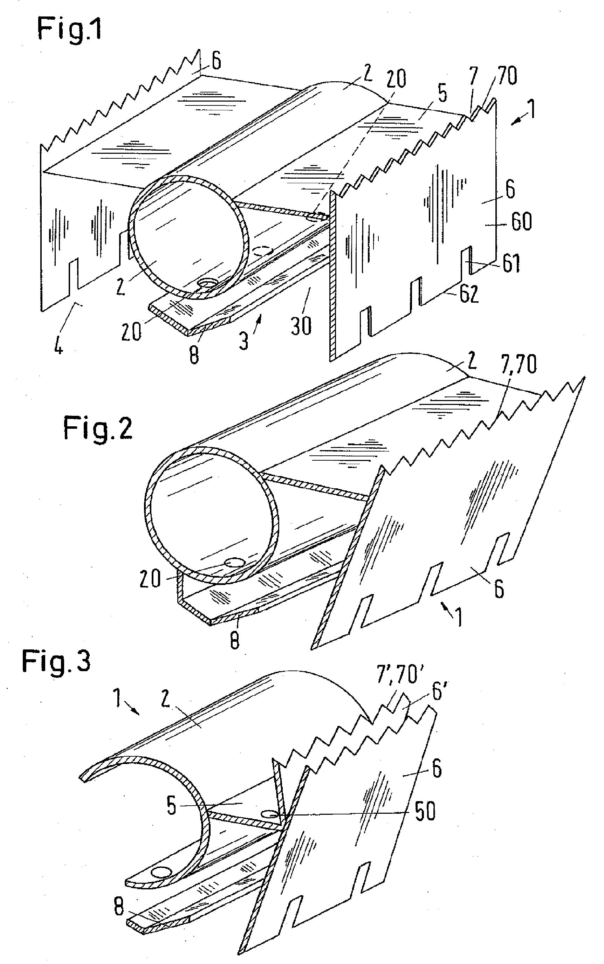

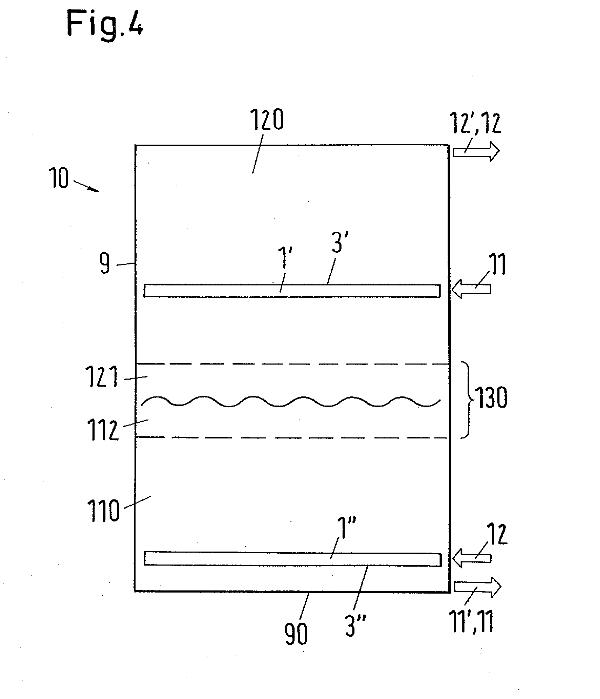

Eine erste Ausführungsform der erfindungsgemässen Einrichtung 1, die in Fig. 1 als Ausschnitt dargestellt ist, erlaubt das Erzeugen einer diskreten Phase mit einer ersten Flüssigkeit in einer kontinuierlichen Phase, die aus einer zweiten Flüssigkeit besteht. Die beiden Flüssigkeiten bilden koexistierende Phasen, die einen erwünschten Stoffaustausch zulassen. Sie weisen unterschiedliche Dichten auf. Es ist vorgesehen, die erfindungsgemässe Einrichtung 1 in einem Behälter anzuordnen (vgl. Fig. 4: Behälter 9), der die zweite, die kontinuierliche Phase bildende Flüssigkeit enthält. Diese Einrichtung 1 umfasst in einer horizontalen Längserstreckung ein Verteilorgan 2, insbesondere ein zylindrisches Rohr, und einen Auffangkanal 3 für die erste Flüssigkeit, wobei der Auffangkanal 3 eine Ausgangsseite 4, eine Auffangseite 5 und mindestens eine die Ausgangsseite 4 und die Auffangseite 5 verbindende Seitenwand 6 aufweist. An der Ausgangsseite 4 stehen die beiden Phasen in Kontakt und erlauben einen Impuls- und Stoffaustausch. Im dargestellten Beispiel ist die erste Flüssigkeit leichter als die zweite. Daher ist die Ausgangsseite 4 gegen unten offen. Erfindungsgemäss umfasst der Auffangkanal 3 zusätzlich ein Umlenkelement 8 (oder umlenkendes Hindernis), das vor Austrittsöffnungen 20 des Verteilorgans 2 angeordnet ist. Es kann auch eine Mehrzahl von Verteilorganen 2 und entsprechenden Umlenkelementen 8 vorgesehen sein.

Die Austrittsöffnungen 20 des Verteilrohrs 2 sind auf einem linearen Streifen angeordnet und das Umlenkelement 8 bildet gegenüber diesem Streifen vorzugsweise eine zusammenhängende, konkave Umlenkfläche. Die erfindungsgemässe Einrichtung 1 kann auch unmittelbar über einem Behälterboden angeordnet sein. In diesem Fall kann auf ein separates Umlenkelement 8 verzichtet werden; der Boden des Behälters übernimmt dessen Funktion. Der sich im Bereich der Ausgangsseite 4 erstreckende Boden ist ein umlenkendes Hindernis, das auch zum Auffangkanal 3 gezählt wird.

Die Austrittsöffnungen 20 können auch seitlich am Verteilrohr 2 und gegen oben gerichtet angeordnet sein. In diesem Fall benötigt man auch kein separates Umlenkelement 8; die Seitenwand 6 wirkt als umlenkendes Hindernis.

Die erste Flüssigkeit tritt strahlförmig aus dem Verteilorgan 2 nach unten aus, prallt auf das umlenkende Hindernis oder Umlenkelement 8 und wird von diesem in den Innenbereich 30 des Auffangkanals 3 zur Auffangseite hin nach oben umgelenkt. Durch das Aufprallen wird die Strömung beruhigt. Bei einer sehr grossen Längserstreckung der Einrichtung 1 (beispielsweise über 30 m) und einem zylindrischen Verteilorgan 2 kann es vorteilhaft sein, ein erstes Verteilrohr koaxial im Verteilorgan 2 für eine erste Stufe der Flüssigkeitsverteilung vorzusehen.

Die erste Flüssigkeit, d. h. die leichtere Flüssigkeit, wird via eine Mehrzahl von Durchbrüchen 61, die in der Seitenwand 6 bei der Ausgangsseite 4 angeordnet sind und die ein gleichmässiges Abfliessen aus dem Innenbereich 30 ermöglichen, auf die Aussenseite der Seitenwand 6 geleitet. Die Durchbrüche 61 sind einschnittartig, zu einer Wandkante 62 hin offen ausgebildet; sie können aber auch lochförmig sein. Die Seitenwand 6 stellt zwischen der Ausgangsseite 4 und einer horizontalen Abtropfkante 7 eine Verbindungsfläche 6 her, die eine Neigung bzw. Form aufweist, welche die Bildung eines Flüssigkeitsfilmes der diskreten Flüssigkeitsphase ermöglicht. Die geneigte Seitenwand 6 stellt eine für die Filmausbildung notwendige Fläche zur Verfügung. Mit Hilfe einer Formgebung, z.B. Abrundung des Bereiches des Flüssigkeitsaustrittes am unteren Ende der Seitenwand 6, kann mittels Verringerung der Relativgeschwindigkeit zwischen den Flüssigkeitsphasen eine Filmausbildung auf der Seitenwand 6 unterstützt werden. Um die Stabilität des Filmes zu erhöhen, kann die Seitenwand 6 eventuell eine für die erste Flüssigkeit gute Benetzbarkeit aufweisen. Die gute Benetzbarkeit lässt sich beispielsweise vor einer Inbetriebnahme durch eine Präparierung der Oberfläche 60 erreichen, indem diese mit einem Film der ersten Flüssigkeit überzogen wird. Weiterhin kann eine aufgeraute Oberfläche 60 die Benetzbarkeit verbessern.

Die Abtropfkante 7 weist eine Zahnung 70 auf, mittels der das Erzeugen der diskreten Phase in Form von Tropfen ermöglicht wird. Die Zahnung 70 ist vorzugsweise gleichmässig ausgebildet, so dass Tropfen entstehen, die alle gleich gross oder weitgehend gleich gross sind.

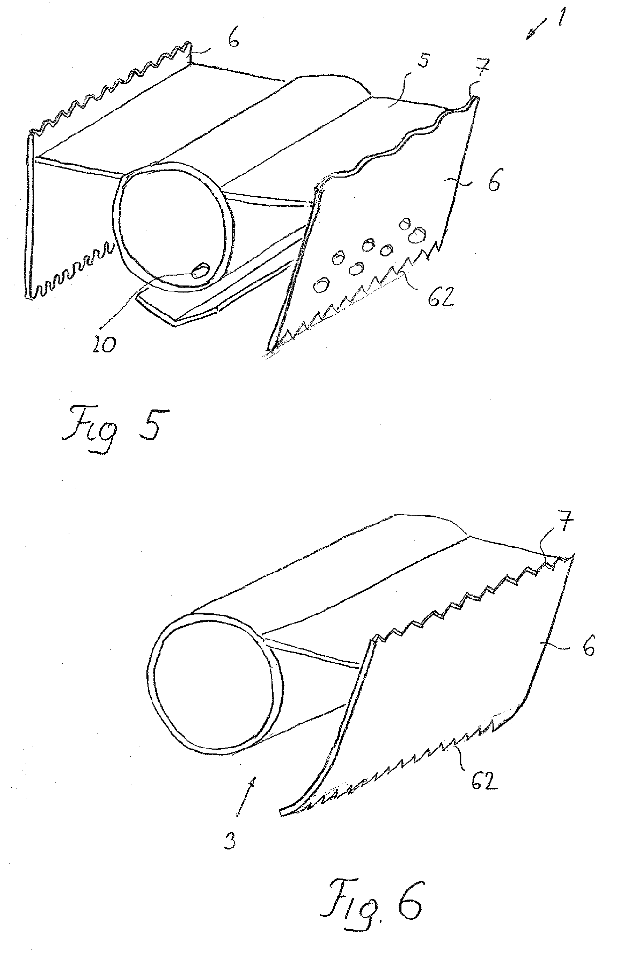

Nach einem weiteren Ausführungsbeispiel, welches in Fig. 5 dargestellt ist, hat die untere Wandkante 62 der Seitenfläche selbst eine Profilierung. Diese Profilierung wird aus im wesentlichen periodisch angeordneten Spitzen und Tälern gebildet, bzw ist insbesondere als Zahnung oder Wellenprofil ausgestaltet. Diese Profilierung kann mit Durchbrüchen 61 ergänzt sein, statt dessen oder in Ergänzung dazu auch Hohlräume aufweisen.

Die Aussenseite der Seitenwand 6 liegt in Fig. 1 zusammen mit der Abtropfkante 7 in einer Ebene, die vertikal oder in einem Winkel zur Vertikalrichtung geneigt ausgerichtet ist. Der Neigungswinkel zwischen der Schnittgeraden der Ebene und einer Horizontalebene mit einer vertikal angeordneten Schnittebene beträgt zwischen 10° und 85°, vorzugsweise zwischen 20° und 60°, besonders bevorzugt 30° bis 40°. In Fig. 1 sind zwei Seitenwände 6 in einer spiegelsymmetrischen Anordnung dargestellt. Zumindest eine dieser beiden Seitenwände kann die erwähnte Neigung aufweisen. Die Einrichtung 1 kann auch nur eine Seitenwand 6 aufweisen, wie es die zweite Ausführungsform der Fig. 2 illustriert. Das Umlenkelement 8 lässt die erste Flüssigkeit nur einseitig abströmen. Bei diesem Beispiel ist ausserdem die Seitenwand 6 geneigt. Bei einer solchen geneigten Lage ist es vorteilhaft, wenn die Zahnung 70 der Abtropfkante 7 in einer Ebene liegt, die von der vertikalen Ebene und vom Verteilorgan 2 weg geneigt ist. Ein unterer Teil der Seitenwand 6 kann auch eine andere Neigung als die durch die Zahnung 70 aufgespannte Ebene haben.

Fig. 3 zeigt eine dritte Ausführungsform, bei der die Auffangseite 5 zusätzlich Löcher 50 für die erste Flüssigkeit enthält. Es ist eine diese Löcher 50 abschirmende Wand 6' vorgesehen, die eine Abtropfkante 7' mit Zahnung 70' hat. Zwischen den Löchern 50 und der Abtropfkante 7' erstreckt sich eine weitere Verbindungsfläche (auf der nicht sichtbaren Fläche der Wand 6', die die gleichen Eigenschaften wie die Abtropfkante 6 aufweist.

Ein weiteres Ausführungsbeispiel einer Einrichtung 1 mit einer Seitenwand 6, die eine als Profilierung ausgeführte Wandkante 62 umfasst, ist in Fig. 5 gezeigt. Die Wandkante der geneigten Seitenwand 62 ist hierin mit einer Zahnung versehen, während die als vertikale Seitenwand 6 dargestellte hintere Seitenwand eine Rillierung aufweist. Die Form und Tiefe der Profilierung ist von der Natur der strömenden Flüssigkeit, sowie deren Menge abhängig. Insbesondere ist eine genügend lange Rillierung vorteilhaft, um ein gleichmässiges Ausströmen aus der Seitenfläche 62 auch bei nicht vollständiger horizontaler Ausrichtung zu gewährleisten. Die Abtropfkante 7 weist ebenfalls eine Profilierung auf. In diesem Beispiel sind wellenartige Profilierungen dargestellt, jede andere Kombination von Profilierungen ist aber möglich. Zusätzlich können in der Seitenwand Bohrungen vorgesehen sein und/oder eine Kombination mit Durchbrüchen 61, was zeichnerisch nicht dargestellt ist.

Fig. 6 zeigt ein weiteres Ausführungsbeispiel, in welcher die Seitenwand 6 eine in Richtung des Auffangkanals 3 gerichtete Krümmung aufweist. Im Bereich des Flüssigkeitsaustritts kann dadurch die Strömung optimiert werden, sodass die Filmausbildung und Filmstabilität auf der Seitenwand unterstützt wird. Selbstverständlich kann die Wandkante 62 und/oder die Abtropfkante 7 jede der früher beschriebenen Profilierungen und Formen aufweisen. Der Einfachheit halber ist in Fig. 6 nur ein Teil der Einrichtung gezeigt, welche entweder symmetrisch, wie in Fig. 1 gezeigt oder einen einseitigen Flüssigeitsaustritt zulassend, wie in Fig. 2 gezeigt, ausgestaltet ist.

Zeichnerisch nicht dargestellt ist eine Einrichtung mit einer Seitenwand, die zumindest einen Knick aufweist. Des weiteren kann die Seitenwand 6 an zumindest einer ihrer seitlichen Kanten ein Führungselement aufweisen. Dieses Führungselement kann als Lasche ausgebildet sein. Dieses Führungselement leitet die über die Ausgangsseite 4 entlang der Durchbrüche 61 sowie der Seitenwand 6 in Richtung der Abtropfkante 7 strömende Flüssigkeit entlang dieses beschriebenen Weges. Insbesondere wird durch das Führungselement vermieden, dass Flüssigkeit über die seitlichen Kanten der Seitenwand 6 strömt.

Die erfindungsgemässe Einrichtung 1 ist für eine Anlage vorgesehen, in welcher sie als eine unter einer Mehrzahl von gleich ausgebildeten Einrichtungen 1 angeordnet ist. Die Verteilorgane 2 sind in der Regel in Form einer Parallelschaltung an eine gemeinsame Zuführleitung (nicht dargestellt) angeschlossen. Bei der in Fig. 4 schematisch dargestellten Anlage 10 mit erfindungsgemässen Einrichtungen lassen sich obere Einrichtungen 1' und untere Einrichtungen 1" unterscheiden. Diese Einrichtungen 1', 1" sind im Behälter 9 angeordnet. Die unteren Einrichtungen 1" sind benachbart zum Boden 90 angeordnet und deren Ausgangsseiten 3" sind gegen unten offen. Die oberen Einrichtungen 1' sind in einem oberen Bereich des Behälters 9 angeordnet; deren Ausgangsseiten 3' sind gegen oben offen. Horizontale Querschnittsflächen des Behälters 9 sind durch die Einrichtungen 1', 1" jeweils gleichmässig belegt; dabei sind die Einrichtungen 1', 1" vorzugsweise parallel ausgerichtet.

In der Anlage 10 sind die oberen Einrichtungen 1' für eine schwere oder schwerere Flüssigkeit 11 und die unteren Einrichtungen 1" für eine leichte oder leichtere Flüssigkeit 12 vorgesehen. Am Boden 90 ist eine Ablaufleitung 11' für die schwere Flüssigkeit 11 am Behälter 9 angeschlossen. Für die leichte Flüssigkeit 12 ist über den oberen Einrichtungen 1' mindestens ein Abflussorgan, das insbesondere eine Ablaufleitung (12') und/oder ein Überlaufwehr (nicht dargestellt) umfasst.

Als eine bevorzugte Verwendung der Anlage 10 ist die Behandlung einer Oel/Wasser-Emulsion mit einem Waschwasser vorgesehen. In diesem Fall ist die schwere Flüssigkeit Wasser und die leichte Flüssigkeit ein zu reinigendes Rohöl, das bereits entgast ist. Im oberen Bereich des Behälters 9 nimmt das Wasser als diskrete Phase Verunreinigungen aus dem Öl auf, das eine kontinuierlichen Phase 120 bildet. Im unteren Bereich des Behälters 9 nimmt das Wasser als eine zweite kontinuierliche Phase 110 Verunreinigungen aus aufsteigenden Öltröpfchen auf. Zwischen den beiden kontinuierlichen Phasen 110 und 120 liegt eine Zone 130, in der die diskreten Phasen durch Koaleszenz zu den entsprechenden kontinuierlichen Phasen verschmelzen. In einer oberen Lage 121 der Zone 130 haben sich die Öltröpfchen weitgehend zur kontinuierlichen Phase 120 vereinigt. Die von oben absinkenden Wassertröpfchen nehmen Resten an Wasser auf, die in der Lage 121 noch verblieben sind. Für eine untere Lage 112, in der das Wasser überwiegt, gilt das entsprechend Umgekehrte.

Selbstverständlich sind auch Verwendungen der erfindungsgemässen Einrichtung 1 denkbar, in denen nur eine schwere oder leichte Flüssigkeit in einer leichten bzw. schweren Flüssigkeit in Tropfenform einzubringen ist.

Die oben beschriebene Anlage ist auch auf einem Schiff verwendbar, auf dem aufgrund einer in der Regel auftretenden Schaukelbewegung die horizontale Ausrichtung nur im zeitlichen Mittel realisierbar ist. Die horizontale Längserstreckung der Verteilrohre bzw. Auffangkanäle 3 bezieht sich daher auf eine mittlere Lage, die in einem unbewegt schwimmenden Schiff oder einer schwimmfähigen Plattform vorliegen würde.

## Patentansprüche

1. Einrichtung (1) zum Erzeugen einer diskreten Flüssigphase einer ersten Flüssigkeit in einer kontinuierlichen Flüssigphase einer zweiten Flüssigkeit, wobei die beiden Flüssigkeiten, welche, einen erwünschten Stoffaustausch zulassend, als getrennte Phasen koexistieren können, unterschiedliche Dichten haben, und es vorgesehen ist, die Einrichtung in einem Behälter (9) anzuordnen, der die zweite, die kontinuierliche Phase bildende Flüssigkeit enthält,
wobei die Einrichtung (1) in einer horizontalen Längserstreckung ein Verteilorgan (2), insbesondere ein zylindrisches Rohr, und einen Auffangkanal (3) für die erste Flüssigkeit umfasst, wobei das Verteilorgan Austrittsöffnungen (20) zum Einbringen der ersten Flüssigkeit in den Auffangkanal (3) aufweist, wobei der Auffangkanal (3) eine offene Ausgangsseite (4) aufweist, sowie eine den Auffangkanal (3) begrenzende Auffangseite (5) und mindestens eine den Auffangkanal (3) begrenzende Seitenwand (6), wobei sich die Auffangseite (5) von dem Verteilorgan (2) ausgehend horizontal erstreckt und die Seitenwand (6) beabstandet zum Verteilorgan (2) angeordnet ist und die Ausgangsseite und die Auffangseite verbindet,
und wobei die Seitenwand (6) auf der Ausgangsseite (4) und/oder der Auffangseite (5) Mittel zum Erzeugen der diskreten Phase in Form von Tropfen aufweist.

2. Einrichtung (1) nach Anspruch 1, wobei das Mittel eine Mehrzahl von Durchbrüchen (61) umfasst, die ein gleichmässiges Abfliessen der ersten Flüssigkeit aus dem Innenbereich (30) entlang der Ausgangsseite (4) und/oder der Auffangseite (5) der Seitenwand (6) ermöglichen.

3. Einrichtung nach Anspruch 2, wobei die Durchbrüche (61) lochartig, zackenartig, einschnittartig oder als Zahnung ausgebildet sind.

4. Einrichtung nach einem der Ansprüche 1 bis 4, wobei die Seitenwand (6) eine Abtropfkante (7) aufweist.

5. Einrichtung nach einem der vorhergehenden Ansprüche, wobei die Seitenwand (6) zumindest teilweise vertikal ausgerichtet ist.

6. Einrichtung (1) nach einem der vorhergehenden Ansprüche, wobei die Seitenwand (6) eine Neigung gegenüber der Horizontalen aufweist, die zwischen 10° und 85°, vorzugsweise zwischen 20° und 60°, besonders bevorzugt 30° bis 40° beträgt.

7. Einrichtung (1) nach einem der vorhergehenden Ansprüche, wobei die Seitenwand (6) zumindest einen Knick aufweist.

8. Einrichtung (1) nach einem der vorhergehenden Ansprüche, wobei die Seitenwand (6) an zumindest einer ihrer seitlichen Kanten ein Führungselement aufweist.

9. Einrichtung nach einem der vorhergehenden Ansprüche, wobei in der Auffangseite (5) zusätzlich Löcher (50) für die erste Flüssigkeit und eine diese Löcher abschirmende Wand (6') mit einer Abtropfkante (7') vorgesehen sind.

10. Einrichtung nach einem der vorhergehenden Ansprüche, wobei der Auffangkanal (3) zusätzlich mindestens ein umlenkendes Hindernis, insbesondere ein Umlenkelement (8) umfasst, das vor Austrittsöffnungen (20) des Verteilorgans (2) angeordnet ist und durch welches die erste Flüssigkeit in einen Innenbereich (30) des Auffangkanals (3) zur Auffangseite (4) hin umlenkbar ist, wobei insbesondere die Austrittsöffnungen (20) des Verteilorgans (2) auf einem linearen Streifen angeordnet sind und das Umlenkelement (8) diesem linearen Streifen gegenüber liegt und eine zusammenhängende, ebene oder konkave Umlenkfläche bildet.

11. Anlage (10) mit einem Behälter (9), der einen Boden (90) und Seitenwände umfasst, sowie mit einer Mehrzahl von im Behälter angeordneten Einrichtungen (1; 1', 1") gemäss eines der vorhergehenden Ansprüche, **dadurch gekennzeichnet, dass** solche Einrichtungen, nachfolgend untere Einrichtungen (1") genannt, benachbart zum Boden angeordnet sind und dass deren Ausgangsseiten (3") gegen unten offen sind, und/oder dass solche bzw. weitere Einrichtungen, nachfolgend obere Einrichtungen genannt (1'), in einem oberen Bereich des Behälters angeordnet sind und dass deren Ausgangsseiten (3') gegen oben offen sind, wobei im Fall der unteren Einrichtungen der Boden ein umlenkendes Hindernis für aus dem Verteilorgan (2) austretende Flüssigkeit sein kann.

12. Anlage nach Anspruch 11, wobei horizontale Querschnittsflächen des Behälters (9) durch die Einrichtungen (1; 1', 1") gleichmässig belegt sind, wobei die Einrichtungen vorzugsweise parallel ausgerichtet sind.

13. Anlage nach Ansprüchen 11 oder 12, wobei sowohl untere als auch obere Einrichtungen (1', 1 ") vorgesehen sind, sodass zum Einspeisen in den Behälter (9) die unteren Einrichtungen (1") für eine erste, leichte Flüssigkeit (12) und die oberen Einrichtungen (1') für eine zweite, schwere Flüssigkeit (11) vorgesehen sind, dass ferner am Boden (90) eine Ablaufleitung (11') für die schwere Flüssigkeit bzw. für die leichte Flüssigkeit mindestens ein Abflussorgan, das insbesondere eine Ablaufleitung (12') und/oder ein Überlaufwehr umfasst, über den oberen Einrichtungen angeordnet sind.

14. Verwendung einer Anlage gemäss Anspruch 13, wobei die zweite, schwere Flüssigkeit (11) Wasser und die erste, leichte Flüssigkeit (12) ein zu reinigendes Rohöl ist und dass im oberen Bereich des Behälters (9) das Wasser als diskrete Phase Verunreinigungen aus dem Rohöl, d.h. der kontinuierlichen Phase (120), aufnimmt und im unteren Bereich des Behälters das Wasser als zweite kontinuierliche Phase (110) Verunreinigungen aus aufsteigenden Öltröpfchen aufnimmt, wobei zwischen den beiden kontinuierlichen Phasen eine Zone (130) liegt, in der die diskreten Phasen durch Koaleszenz zu den entsprechenden kontinuierlichen Phasen verschmelzen.

15. Verwendung der Anlage nach Anspruch 14, auf einer schwimmfähigen Plattform oder einem Transportmittel, insbesondere einem Schiff.

## Claims

1. A device (1) for the generation of a discrete liquid phase of a first liquid in a continuous liquid phase of a second liquid, wherein the two liquids which can coexist as separate phases while permitting a desired mass transfer have different densities and wherein provision is made to arrange the device in a container (9) which contains the second liquid forming the continuous phase,
wherein the device (1) comprises a distribution member (2), in particular a cylindrical tube, and a collection passage (3) for the first liquid in a horizontal longitudinal extent, wherein the distribution member has discharge openings (20) for the introduction of the first liquid into the collection passage (3), wherein the collection passage (3) has an open outlet side (4) as well as a collection side (5) bounding the collection passage (3) and at least one side wall (6) bounding the collection passage (3), wherein the collection side (5) extends horizontally starting from the distribution member (2) and the side wall (6) is arranged spaced apart from the distribution member (2) and connects the outlet side and the collection side,
and wherein the side wall (6) has means for the generation of the discrete phase in the form of drops at the starting side (4) and/or at the collection side (5) .

2. A device (1) in accordance with claim 1, wherein the means comprises a plurality of openings (61) which permit a uniform outflow of the first liquid from the inner region (30) along the outlet side (4) and/or along the collection side (6) of the side wall.

3. A device in accordance with claim 2, wherein the openings (62) are configured in the manner of holes, indentation or incisions or are configured as a toothed arrangement.

4. A device in accordance with any one of the claims 1 to 3, wherein the side wall (6) has a drip edge (7).

5. A device in accordance with any one of the preceding claims, wherein the side wall (6) is aligned vertically at least in part.

6. A device (1) in accordance with any one of the preceding claims,
wherein the side wall (6) has an inclination toward the horizontal which amounts to between 10° and 85°, preferably between 20° and 60°, particularly preferably to 30° to 40°.

7. A device (1) in accordance with any one of the preceding claims, wherein the side wall (67) has at least one kink.

8. A device (1) in accordance with any one of the preceding claims, wherein the side wall (6) has a guide element at at least one of its side edges.

9. A device in accordance with any one of the preceding claims, wherein holes (50) for the first liquid are additionally provided in the collection side (5) and a wall (6') with a drip edge (7') shielding these holes is provided.

10. A device (1) in accordance with any one of the preceding claims, wherein the collection passage (3) additionally includes at least one deflecting obstacle, in particular a deflection member (8), which is arranged in front of discharge openings (20) of the distribution member (2) and by which the first liquid can be deflected towards the collection side (4) into an inner region (30) of the collection passage (3), with in particular the discharge openings (20) of the distribution member (2) being arranged on a linear strip and the deflection member (8) being disposed opposite this linear strip and forming a contiguous planar or concave deflection surface.

11. A plant (10) having a container (9) which comprises a base (90) and side walls as well as having a plurality of devices (1; 1', 1") arranged in the container in accordance with any one of the preceding claims, **characterised in that** such devices, called lower devices (1") in the following, are arranged adjacent to the base; and **in that** their outlet sides (3") are open towards the bottom; and/or **in that** such or further devices, called upper devices (1') in the following, are arranged in an upper region of the container; and **in that** their outlet sides (3') are open towards the top, with, in the case of the lower devices, the base being able to be a deflecting obstacle for liquid discharged from the distribution member (2).

12. A plant in accordance with claim 11, wherein horizontal cross-sectional surfaces of the container (9) are uniformly occupied by the devices (1; 1', 1"), with the devices preferably being aligned in parallel.

13. A plant in accordance with claim 11 or claim 12, wherein both lower and upper devices (1', 1") are provided so that, for the feeding into the container (9), the lower devices (1") are provided for a first, light liquid (12) and the upper devices (1') are provided for a second, heavy liquid (11); wherein furthermore a drain line (11') for the heavy liquid or for the light liquid, at least one outflow member which in particular includes a drain line (12') and/or an overflow weir are arranged above the upper devices.

14. Use of a plant in accordance with claim 13, wherein the second, heavy liquid (11) is water and the first, light liquid (12) is a crude oil to be purified; and wherein, in the upper region of the container (9), the water as the discrete phase absorbs pollutants from the crude oil, that is from the continuous phase (120), and, in the lower region of the container, the water as the second continuous phase (110) absorbs pollutants from rising oil droplets, with a zone (130) being disposed between the two continuous phases and the discrete phases merging to form the corresponding continuous phases by coalescence in it.

15. Use of the plant in accordance with claim 14 on a floating platform or on a means of transport, in particular on a ship.

## Revendications

1. Système (1) pour engendrer une phase liquide discrète d'un premier liquide dans une phase liquide continue d'un second liquide, dans lequel les deux liquides, lesquels peuvent coexister comme des phases séparées en permettant un échange de matières souhaité, ont des densités différentes, et il est prévu d'agencer le système dans un récipient (9) qui contient le second liquide qui forme la phase continue, dans lequel le système (a) inclut, dans une extension longitudinale horizontale, un organe répartiteur (2), en particulier un tube cylindrique, et un canal récepteur (3) pour le premier liquide, dans lequel l'organe répartiteur comporte des ouvertures de sortie (20) pour l'introduction du premier liquide dans le canal récepteur (3), dans lequel le canal récepteur (3) comporte un côté de sortie ouvert (4) ainsi qu'un côté récepteur (5) qui limite le canal récepteur (3) et au moins une paroi latérale (6) qui limite le canal récepteur (3), dans lequel le côté récepteur (6) est agencé à distance de l'organe répartiteur (2) et relie le côté de sortie et le côté récepteur, et dans lequel la paroi latérale (6) comprend, sur le côté de sortie (4) et/ou sur le côté récepteur (5), des moyens pour engendrer la phase discrète sous la forme de gouttes.

2. Système (1) selon la revendication 1, dans lequel les moyens incluent une pluralité de traversées (61), qui permettent un écoulement régulier sortant du premier liquide hors de la zone intérieure (30) le long du côté de sortie (4) et/ou du côté récepteur (5) de la paroi latérale (6).

3. Système selon la revendication 2, dans lequel les traversées (61) sont réalisées à la manière de trous, à la manière de dents, à la manière d'entailles, ou sous forme de denture.

4. Système selon l'une des revendications 1 à 4, dans lequel la paroi latérale (6) comporte une arête d'égouttement (7).

5. Système selon l'une des revendications précédentes, dans lequel la paroi latérale (6) est orientée au moins partiellement verticalement.

6. Système (1) selon l'une des revendications précédentes, dans lequel la paroi latérale (6) présente une inclinaison par rapport à l'horizontale, qui s'élève entre 10° et 85°, de préférence entre 20° et 60°, et de manière particulièrement préférée de 30° à 40°.

7. Système (1) selon l'une des revendications précédentes, dans lequel la paroi latérale (6) présente au moins un coude.

8. Système (1) selon l'une des revendications précédentes, dans lequel la paroi latérale (6) comprend un élément de guidage sur l'une au moins de ses arêtes latérales.

9. Système selon l'une des revendications précédentes, dans lequel il est prévu, dans le côté récepteur (5), en supplément des trous (50) pour le premier liquide et une paroi (6'), qui fait écran pour ces trous, avec une arête d'égouttement (7').

10. Système selon l'une des revendications précédentes, dans lequel le canal récepteur (3) inclut en supplément au moins un obstacle déflecteur, en particulier un élément déflecteur (8), qui est agencé devant des ouvertures de sortie (20) de l'organe répartiteur (2) et au moyen duquel le premier liquide dans une zone intérieure (30) du canal récepteur (3) peut être dévié vers le côté récepteur (4), dans lequel en particulier les ouvertures de sortie (20) de l'organe répartiteur (2) sont agencées sur une bande linéaire, et l'élément déflecteur (8) est situé à l'opposé de cette bande linéaire et forme une surface de déflexion plane ou concave cohérente.

11. Installation (10) comprenant un récipient (9) qui inclut un fond (90) et des parois latérales, ainsi qu'une pluralité de systèmes (1 ; 1', 1") selon l'une des revendications précédentes, agencés dans le récipient, **caractérisée en ce que** lesdits systèmes, dénommé dans ce qui suit systèmes inférieurs (1"), sont agencés au voisinage du fond, et **en ce que** leurs côtés de sortie (3") sont ouverts vers le fond, et/ou **en ce que** lesdits systèmes ou respectivement d'autres systèmes, dénommés dans ce qui suit systèmes supérieurs (1'), sont agencés dans une région supérieure du récipient, et **en ce que** leurs côtés de sortie (3') sont ouverts vers le haut, et dans le cas des systèmes inférieurs le fond peut être un obstacle déflecteur pour le liquide qui sort hors de l'organe répartiteur (2).

12. Installation selon la revendication 11, dans laquelle des surfaces de section transversale horizontale du récipient (9) sont occupées régulièrement par les systèmes (1 ; 1' ; 1"), et lesdits systèmes sont de préférence orientés parallèlement.

13. Installation selon les revendications 11 ou 12, dans laquelle il est prévu aussi bien des systèmes inférieurs que des systèmes supérieurs (1', 1"), de sorte que pour l'alimentation dans le récipient (9) les systèmes inférieurs (1") sont prévus pour un premier liquide léger (12) et les systèmes supérieurs (1') sont prévus pour un second liquide plus lourd (11), et en ce qu'il est en outre prévu au fond (90) une conduite de sortie (11') pour le liquide plus lourd ou respectivement pour le liquide plus léger, ainsi qu'au moins un organe d'écoulement sortant, qui inclut en particulier une conduite de sortie (12') et/ou un barrage de déversement, qui sont agencés au-dessus des systèmes supérieurs.

14. Utilisation d'une installation selon la revendication 13, dans laquelle le second liquide plus lourd (11) est de l'eau et le premier liquide léger (12) est un pétrole brut à purifier, et en ce que dans la région supérieure du récipient (9), l'eau reprend à titre de phase discrète des impuretés venant du pétrole brut, c'est-à-dire la phase continue (120) et, dans la région inférieure du récipient l'eau, à titre de seconde phase continue (110), reprend des impuretés hors des gouttes de pétrole en cours d'ascension, et dans laquelle il se présente entre les deux phases continues une zone (130) dans laquelle les phases discrètes fusionnent par coalescence pour donner les phases continues correspondantes.

15. Utilisation de l'installation selon la revendication 14, sur une plate-forme flottante ou sur un moyen de transport, en particulier un bateau.
